**Europäisches Patentamt**

**European Patent Office**

**Office européen des brevets**

(11) Numéro de publication : **0 299 900 B1**

(12) **FASCICULE DE BREVET EUROPEEN**

(45) Date de publication du fascicule du brevet :
28.08.91 Bulletin 91/35

(51) Int. Cl.⁵ : **A01K 61/00**

(21) Numéro de dépôt : **88460013.1**

(22) Date de dépôt : **13.07.88**

(54) Structure flottante pour pisciculture.

(30) Priorité : **17.07.87 FR 8710340**

(43) Date de publication de la demande :
**18.01.89 Bulletin 89/03**

(45) Mention de la délivrance du brevet :
**28.08.91 Bulletin 91/35**

(84) Etats contractants désignés :
**ES GB GR IT SE**

(56) Documents cités :
**EP-A- 0 165 160**
**WO-A-87/03170**
**GB-A- 2 184 631**
**US-A- 4 013 042**

(73) Titulaire : **Sergent, Yann**
**Paluden**
**F-29214 Lannilis (FR)**

(72) Inventeur : **Sergent, Yann**
**Paluden**
**F-29214 Lannilis (FR)**

(74) Mandataire : **Martin, Jean-Jacques et al**
**Cabinet REGIMBEAU 11, rue Franz Heller**
**F-35700 Rennes (FR)**

## Description

La présente invention concerne une structure flottante pour pisciculture, et plus précisément une structure flottante destinée à supporter un filet immergé en forme de poche dans lequel sont contenus les poissons élevés.

Dans les dispositifs de ce genre qui sont actuellement utilisés, en particulier pour la pisciculture marine, notamment pour l'élevage de saumons et de truites de mer, la structure flottante est constituée d'un assemblage de pontons flottants. Ces pontons forment les côtés de rectangles juxtaposés ; ils sont munis de rembardes de sécurité, celles-ci servant par ailleurs à l'accrochage des filets. Chaque filet a un contour rectangulaire s'inscrivant dans un rectangle délimité par quatre pontons.

Ces structures traditionnelles présentent plusieurs inconvénients.

En premier lieu elles sont très lourdes, ce qui pose des difficultés pour l'entretien et le déplacement des structures ;

En second lieu elles sont relativement fragiles et résistent mal aux fortes houles, et aux clapotages superficiels.

Enfin, elles sont mal adaptées pour recevoir un dispositif de distribution automatique des aliments pour les poissons contenus dans la poche. En effet, l'emplacement optimal d'un tel dispositif distributeur se trouve au-dessus de la zone centrale de la poche, c'est-à-dire dans un espace vide ; le montage du dispositif sur la structure se fait donc de manière très empirique et plus ou moins efficiente.

On connait également, par le document GB-A-2184631, une structure de cage pour pisciculture qui présente un contour polygonal et qui comprend les caractéristiques du préambule de la revendication 1. Les côtés de la structure sont formés de barres flottantes connectées les unes aux autres, et il est prévu une plate-forme centrale reliée par un ou plusieurs bras à certains angles de la structure. Ce sont les barres constitutives des côtés du polygone qui assurent à elles seules la rigidité de la structure. Ces barres sont donc soumises — comme les pontons des cages traditionnelles — à des efforts variés non seulement de traction/compression, mais aussi de flexion et de torsion. C'est pourquoi, à moins d'utiliser des éléments surdimensionnés (et donc lourds et coûteux) ce type de cage connu résiste mal aux fortes houles et aux tempêtes.

La présente invention se propose de remédier à ces différents inconvénients en proposant une structure du genre énoncé qui soit à la fois légère et robuste, qui résiste aux intempéries et aux fortes houles, qui soit facile à déplacer et à utiliser, et qui puisse recevoir un dispositif de distribution automatique des aliments judicieusement positionné.

Ces différents résultats sont atteints conformément à l'invention grâce au fait que les extrémités des bras radiaux opposées à la plate-forme servent à l'accrochage du filet, chacune de ces extrémités étant reliée aux extrémités correspondantes des bras voisins par des filins, ceux-ci constituant un haubannage de la structure. En outre ces filins peuvent être avantageusement utilisés pour servir à l'accrochage du filet en forme de poche.

On comprendra aisément que dans un tel arrangement, la majeure partie des efforts auxquels est soumise la structure flottante sont encaissés par les filins et par les bras sous forme d'efforts longitudinaux de traction ou de compression. Comme les bras n'ont pratiquement pas à subir d'efforts de flexion ni de torsion, il est possible de les fabriquer dans des matériaux relativement courants (aluminium) et avec des dimensions relativement faibles, ce qui allège le poids de l'ensemble.

De préférence, les bras radiaux sont fixés à la plate-forme par des liaisons élastiques, celles-ci comprenant par exemple une plaquette flexible en caoutchouc synthétique permettant le débattement vertical du bras. En outre ces liaisons élastiques sont avantageusement pourvues d'un dispositif de stabilisation de la plate-forme centrale.

Ce dispositif comporte par exemple une barre ayant la forme générale d'un U dont la partie centrale est retenue et guidée en rotation dans un manchon solidaire de la plate-forme, et qui relie l'un à l'autre, par des extrémités coudées, deux bras opposés de la structure, c'est-à-dire deux bras alignés situés de part et d'autre de la plate-forme. Il est donc prévu un dispositif stabilisateur par paire de bras.

Si on a affaire à une structure de grandes dimensions, il est avantageux, voire nécessaire, de pourvoir également de flotteurs la plate-forme centrale.

L'un au moins des bras radiaux est constitué de préférence d'une passerelle, équipée d'une rambarde, cette passerelle permettant au pisciculteur d'accéder à la plate-forme centrale à partir de l'un des angles de la structure.

La plate-forme centrale peut être directement adaptée pour recevoir un dispositif de distribution automatique d'aliments pour les poissons contenus dans le filet, ce dispositif étant placé à l'endroit idéal, à l'aplomb de la zone centrale du filet.

Dans le mode de réalisation préférentiel de l'invention, la structure comporte quatre bras radiaux formant les quatre demi-diagonales d'un carré et supportant un filet à contour correspondant, également sensiblement carré.

D'autres particularités et avantages de l'invention apparaîtront de la description qui va suivre et des dessins annexés, qui représentent un mode de réalisation préférentiel de l'invention.

Sur les dessins :
— la figure 1 est une vue de dessus schématique de la structure ;

— la figure 2 est une section de l'un des bras constitutifs de la structure, coupé par le plan transversal A-A de la figure 1 ;

— la figure 3 est une vue de face de la structure de la figure 1, coupée par le plan III-III de cette figure ;

— la figure 4 représente le système de liaison élastique et le dispositif stabilisateur reliant deux bras opposés (situés de part et d'autre de la plate-forme centrale), l'un à l'autre et à cette plate-forme ;

— la figure 5 est une vue de côté coupée par le plan V-V de la figure 4 ;

— la figure 6 représente le système d'attache des filins à l'extrémité de l'un des bras constitutif de la structure.

La structure flottante représentée sur les figures comprend une plate-forme centrale carrée 1 qui est montée sur une armature en tubes mécano-soudés 12 dont la partie inférieure porte quatre flotteurs 11 ; ceux-ci sont par exemple des bidons cylindriques en polyéthylène remplis de mousse de polyuréthane.

Cette plate-forme supporte un dispositif de distribution d'aliments, dont seule la trémie de stockage 10 des aliments (granulés) a été représentée dans un but de simplification.

De la plate-forme 1, qui consiste par exemple en une plaque d'aluminium dont le côté a une dimension de l'ordre de 90 cm, partent quatre bras radiaux, de même longueur, qui forment les demi-diagonales d'un carré dans lequel s'inscrit la structure.

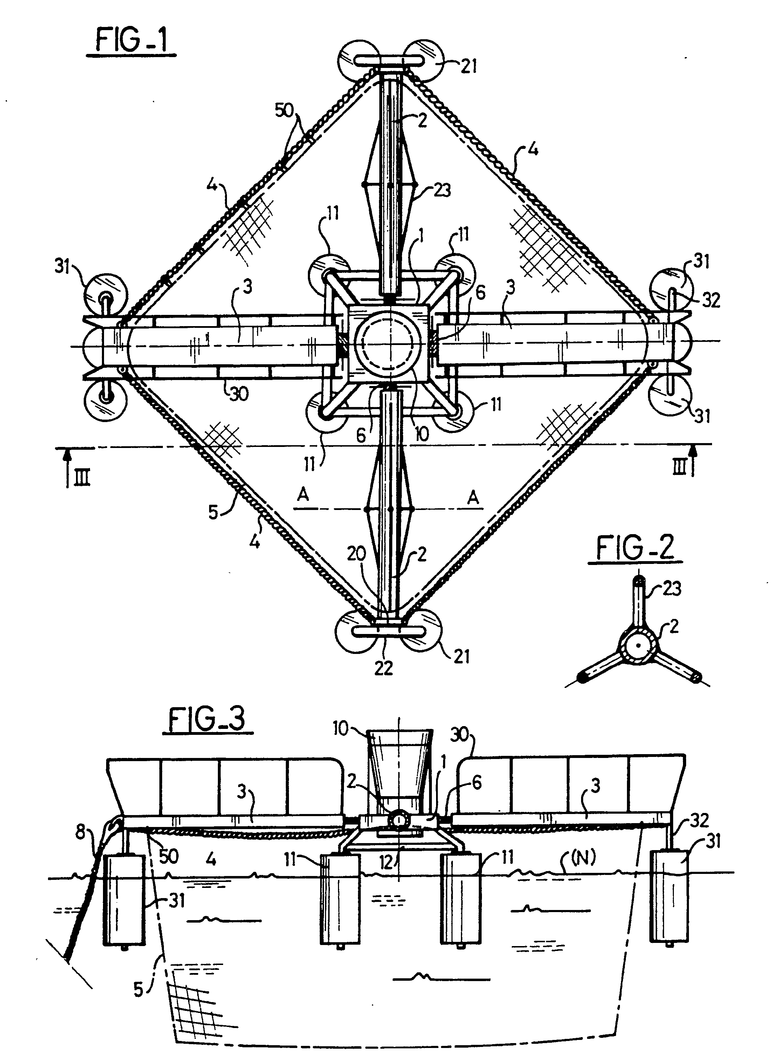

Deux de ces bras, référencés 2, qui sont situés dans le prolongement l'un de l'autre (de part et d'autre de la plate-forme 1) sont des tubes d'aluminium rigidifiés par des barres 23 destinées à améliorer leur résistance au flambage ; la figure 2 montre de quelle manière est constituée l'armature 23 dont les barres constitutives sont disposées en étoile à trois branches réparties à 120°.

Les deux autres bras 3, également situés dans le prolongement l'un de l'autre, sont des plaques en aluminium de faible épaisseur, par exemple des profilés en U renversé, qui possèdent une largeur suffisante pour permettre la marche normale d'une personne ; ces bras jouent le rôle de passerelles, et à cet effet sont pourvus de rambardes latérales appropriées 30.

A titre d'exemple, chacun des bras 2, 3 peut avoir une longueur de l'ordre de 6 mètres.

Les extrémités extérieures des bras 2, 3 portent, par l'intermédiaire d'une armature en tubes mécano-soudés 22, respectivement 32, des flotteurs 21, respectivement 31, similaires aux flotteurs centraux 11.

Les bras tubulaires 2 portent par exemple deux flotteurs, tandis que les bras 3 formant passerelles — plus lourds — portent chacun trois flotteurs.

A titre d'exemple la capacité de chacun des flotteurs centraux 11 est de 220 litres, tandis que la capacité de chacun des flotteurs extérieurs 21, 31 est de 120 litres.

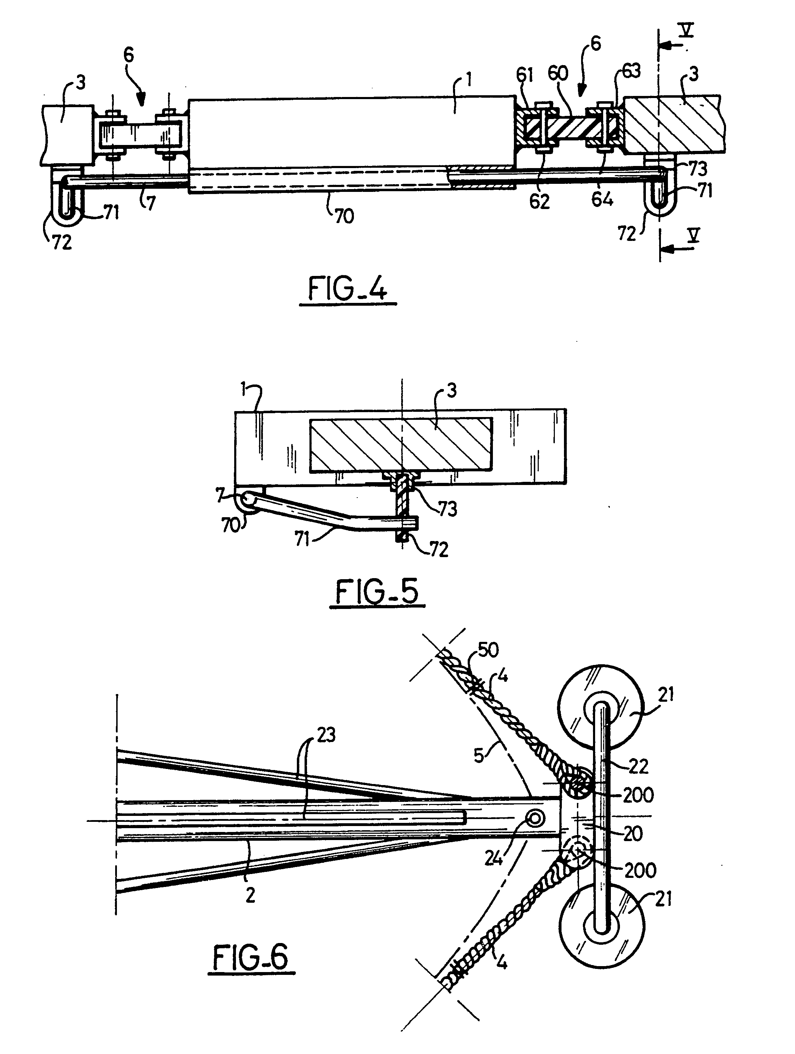

Selon une caractéristique importante de l'invention, les bras 2 et 3 sont fixés à la plate-forme centrale 1 par l'intermédiaire d'une liaison élastique 6 qui est illustrée plus précisément à la figure 4.

En vis à vis de chacun des bras 2, 3, la plate-forme 1 est munie d'un morceau de cornière en U 61, disposée horizontalement, dont l'ouverture est tournée vers le bras correspondant 2 ou 3.

Ce bras est muni d'une cornière similaire 63 tournée vers la plate-forme centrale ; les cornières 61, 63 sont par exemple soudées respectivement sur le côté de la plate-forme 1 et sur l'extrémité du bras 2 ou 3 ; dans les cornières 61, 63, qui sont tournées l'une vers l'autre, est encastrée une plaque 60 en matériau élastique et relativement souple, ce matériau pouvant être un caoutchouc synthétique tel que le néoprène ou le polyuréthane.

Les extrémités de la plaquette 60 sont fixées aux cornières 61 et 63 au moyen de boulons 62, respectivement 64.

A la plate-forme 1, par exemple à l'un des bords de la face inférieure de cette plate-forme, est soudé un manchon métallique 70, dans lequel est montée une barre métallique 7 pouvant tourner librement ; celle-ci a la forme d'un U, ses extrémités 71 étant coudées à angle droit ; les parties coudées 71 s'étendent chacune sous l'extrémité d'un bras 3 et pénètrent dans un trou ménagé dans une plaquette 72 en matériau élastique ; celle-ci est fixée au bras 3 associé, à l'aide d'un organe de fixation 73 approprié.

Un dispositif stabilisateur similaire non représenté, disposé à 90° par rapport à celui qui vient d'être décrit, relie l'un à l'autre (et à la plate-forme centrale) les deux autres bras 2 en forme de tubes.

Comme on le comprend aisément à l'observation des figures 4 et 5, la présence des plaquettes élastiques 60 autorise un léger débattement latéral (c'est-à-dire dans un plan horizontal) des bras 3, ainsi qu'un débattement relativement plus important des bras 3 dans le sens vertical (vers le haut ou vers le bas).

Chacun des dispositifs stabilisateurs assure le maintien permanent de la plate-forme 1 dans le plan de symétrie situé entre les deux bras opposés qu'il relie, et empêche qu'elle ne chavire, même dans les fortes houles.

Selon une caractéristique importante de l'invention, les extrémités des bras 3 et 4 de deux bras voisins sont reliées par des filins 4 tels que des cordages, ces filins présentant de préférence une certaine élasticité à la traction ; le filin 4 est accroché par exemple à un oeillet prévu sur le flanc de l'extrémité de la passerelle 3 ; il est fixé à son autre extrémité par un dispositif de fixation représenté à la figure 6 ; ce dispositif comprend par exemple une ferrure 20 en forme de gousset portant deux axes verticaux 200 autour desquels sont engagées les extrémités en forme de boucle des filins 4.

Selon une caractéristique intéressante de l'invention, les filins 4, qui matérialisent le contour carré de la structure, servent à l'accrochage du filet en forme de poche destiné à recevoir les poissons de l'élevage.

Ce filet, désigné par la référence 5, et représenté en traits mixtes forts aux figures 1 et 3, a un contour carré de forme correspondante ; le côté du filet a dans l'exemple représenté une longueur de l'ordre de 8,5 à 9 m ; la profondeur de la poche est par exemple de l'ordre de 4 à 5 m.

Le filet 5 en forme de poche présente, de manière connue, un cordon périphérique — ou ralingue —, qui est accroché aux filins 4 au moyen d'attaches appropriées 50 ; au niveau de l'extrémité des bras 2, 3, le cordon périphérique du filet passe sous ces bras ; il peut être prévu à l'extrémité des bras un organe 24 (voir figure 6) apte à permettre l'accrochage de l'angle du filet également à ce niveau.

A la figure 3 la structure flottante qui vient d'être décrite est représentée sur le site, flottant sur l'eau, dont le niveau est référencé (N). Le volume des flotteurs est déterminé de telle manière que les bras horizontaux 2, 3 soient situés à un niveau d'au moins 1 mètre au-dessus du niveau N ; un mouillage, dont on a représenté seulement la partie haute 8 de l'orin, permet d'amarrer la structure à l'endroit souhaité.

La plate-forme centrale 1 est équipée d'un distributeur automatique d'aliments 10, de type connu ; ce dispositif comprend notamment un moteur électrique alimenté par une batterie rechargeable ; cette dernière peut être rechargée automatiquement par des panneaux solaires appropriés ; le moteur est piloté par une horloge, et sa mise en marche périodique détermine la distribution d'aliments à partir de la partie centrale de la structure, dans l'ensemble du filet 5.

La structure qui vient d'être décrite est extrêmement légère ; elle résiste aux clapotages de surface et aux fortes houles grâce à la présence des liaisons élastiques et des dispositifs stabilisateurs reliant les bras à la plate-forme centrale et les bras entre eux ; la plupart des efforts sont encaissés par les filins 4. Cette structure peut être facilement déplacée, par remorquage, en raison de sa légèreté ; il est très aisé d'accéder à la plate-forme centrale 1 grâce aux passerelles 3, pour la maintenance, le contrôle et le réapprovisionnement du dispositif distributeur d'aliments 10.

Il va de soi que l'invention n'est pas limitée au seul mode de réalisation qui vient d'être décrit à simple titre d'exemple ; elle en englobe au contraire toutes les variantes.

C'est ainsi par exemple que la structure pourrait avoir une forme générale autre que carrée ou rectangulaire, par exemple hexagonale ou octogonale.

Les dimensions de la structure seront choisies bien entendu en fonction de la capacité du filet, c'est-à-dire du nombre de poissons élevés.

Plusieurs structures flottantes peuvent par ailleurs être arrimées les unes aux autres de manière à former un assemblage flottant supportant plusieurs filets d'élevage.

Dans une variante du mode de réalisation préférentiel qui a été décrit, l'ensemble des quatre flotteurs 11 pourrait être remplacé par un flotteur central situé sous la plate-forme 1, ce flotteur présentant une paroi conique ; dans ce cas, le dispositif distributeur d'aliments pourrait être conçu pour faire tomber ces derniers sur la paroi conique, cette paroi assurant une répartition régulière des aliments sur toute la périphérie du flotteur.

Les quatre bras radiaux constituant la structure (et pas seulement deux d'entre eux) pourraient consister en des passerelles.

## Revendications

1. Structure flottante destinée à supporter un filet en forme de poche pour pisciculture, structure comprenant une plate-forme centrale (1) à laquelle sont attenants une série de bras radiaux (2, 3) sensiblement horizontaux, dont les extrémités opposées à ladite plate-forme (1) sont pourvues de flotteurs (21, 31), caractérisé en ce que lesdites extrémités servent à l'accrochage du filet (5), chacune de ces extrémités étant reliée aux extrémités correspondantes des bras voisins par des filins (4), ceux-ci constituant un haubannage de la structure.

2. Structure flottante selon la revendication 1, caractérisée par le fait que le filet (5) en forme de poche est accroché auxdits filins (4).

3. Structure flottante selon l'une des revendications 1 ou 2, caractérisée par le fait que les bras (2, 3) sont fixés à la plate-forme (1) par des liaisons élastiques (6).

4. Structure flottante selon la revendication 3, caractérisée par le fait que les liaisons élastiques (6) comprennent une plaquette flexible en caoutchouc synthétique (60) qui permet le débattement vertical du bras (2, 3).

5. Structure flottante selon l'une des revendications 3 ou 4, caractérisée par le fait que les liaisons élastiques (6) comprennent un dispositif de stabilisation de la plate-forme.

6. Structure flottante selon la revendication 5, caractérisée par le fait que ledit dispositif de stabilisation comporte une barre (7) en forme de U qui est retenue par un manchon (70) solidaire de la plate-forme centrale (1), et qui relie l'un à l'autre par ses extrémités coudées (71) deux bras alignés (3, 4) situés de part et d'autre de cette dernière.

7. Structure flottante selon l'un des revendications 1 à 6, caractérisée par le fait que ladite plate-forme centrale (1) est pourvue de flotteurs (11).

8. Structure flottante selon l'une des revendications 1 à 7, caractérisée par le fait que l'un au moins des bras radiaux (3) constitue une passerelle qui permet d'accéder à la plate-forme centrale.

9. Structure flottante selon l'une des revendications 1 à 8, caractérisée par le fait que la plate-forme centrale est équipée d'un dispositif de distribution automatique d'aliments (10) pour les poissons contenus dans le filet (5).

10. Structure flottante selon l'une des revendications 1 à 9, caractérisée par le fait qu'elle comporte quatre bras radiaux (2, 3) formant les demi-diagonales d'un carré et supportant un filet à contour correspondant, sensiblement carré.

## Patentansprüche

1. Schwimmende Vorrichtung, die dazu bestimmt ist, ein Netz in der Form einer Tasche zur Aufzucht von Fischen zu halten und eine zentrale Plattform (1) umfaßt, an der eine Reihe radialer, im wesentlichen horizontaler Arme (2, 3) angebracht sind, deren der Plattform (1) gegenüberliegenden Enden mit Schwimmkörpern (21, 31) versehen sind, dadurch gekennzeichnet, daß diese Enden zum Aufhängen des Netzes (5) dienen, wobei jedes dieser Enden mit den entsprechenden Enden der benachbarten Arme über Taue (4) verbunden ist, wobei diese eine Verspannung für die Vorrichtung bilden.

2. Schwimmende vorrichtung nach Anspruch 1, gekennzeichnet durch die Tatsache, daß das Netz (5) in der Form einer Tasche an den Tauen (4) aufgehängt ist.

3. Schwimmende Vorrichtung nach einem der Ansprüche 1 oder 2, gekennzeichnet durch die Tatsache, daß die Arme (2, 3) an der Plattform (1) über elastische Verbindungsstücke (6) befestigt sind.

4. Schwimmende Vorrichtung nach Anpruch 3, gekennzeichnet durch die Tatsache, daß die elastischen Verbindungen (6) eine Flexible Plakette (60) aus synthetischen Kautschuk umfassen, die die vertikale Durchfederung des Arms (2, 3) ermöglicht.

5. Schwimmende Vorrichtung nach einem der Ansprüche 3 oder 4, gekennzeichnet durch die Tatsache, daß die elastischen Verbindungen (6) eine Vorrichtung zur Stabilisierung der Plattform umfassen.

6. Schwimmende Vorrichtung nach Anspruch 5, gekennzeichnet durch die Tatsache, daß die Vorrichtung zur Stabilisierung eine Stange (7) in der Form eines U umfaßt, die von einer mit der Plattform verbundenen Muffe (70) gehalten wird und die der Reihe nach über ihre abgewinkelten Enden (71) zwei ausgerichtete Arme (3, 4) verbindet, die sich auf der einen und anderen Seite der letzteren befinden.

7. Schwimmende Vorrichtung nach einem der Ansprüche 1 bis 6, gekennzeichnet Durch die Tatsache, daß die zentrale Plattform (1) mit Schwimmkörpern (11) versehen ist.

8. Schwimmende Vorrichtung nach einem Der Ansprüche 1 bis 7, gekennzeichnet durch die Tatsache, daß wenigstens einer der radialen Arme (3) einen Übergang bildet, der erlaubt, die zentrale Plattform zu betreten.

9. Schwimmende Vorrichtung nach einem der Ansprüche 1 bis 8, gekennzeichnet durch die Tatsache, daß die zentrale Plattform mit einer Vorrichtung zur automatischen Verteilung von Nahrungsmitteln (10) an die in dem Netz (5) gehaltenen Fische versehen ist.

10. Schwimmende Vorrichtung nach einem der Ansprüche 1 bis 9, gekennzeichnet durch die Tatsache, daß sie vier radiale Arme (2, 3) umfaßt, die die Halbdiagonalen eines Quadrats bilden und ein Netz entsprechenden, im wesentlichen quadratischen Umrisses halten.

## Claims

1. A floating structure for supporting a pocket-shaped net for fish farming, said structure comprising a central platform (1) to which a series of substantially horizontal radial arms (2, 3) are attached, with the ends of the arms furthest from said platform (1) being provided with floats (21, 31) characterized in that said ends serve as fastening points for the net (5), each of said ends being connected to the corresponding ends of the adjacent arms by cords (4), thereby constituting staying for the structure.

2. A floating structure according to claim 1, characterized in that pocket-shape net (5) is fastened to said cords (4).

3. A floating structure according to claim 1 or 2, characterized in that the arms (2, 3) are fixed to the platform (1) by resilient links (6).

4. A floating structure according to claim 3, characterized by the fact that resilient links (6) comprise a flexible plate of synthetic rubber (60) allowing arm (2, 3) to be deflected vertically.

5. A floating structure according to claim 3 or 4, characterized in that the resilient links (6) include a device for stabilizing the platform.

6. A floating structure according to claim 5, characterized by the fact that said device for stabilizing the platform comprises a U-shaped bar (7) which is retained by a sleeve (70) fixed to the central platform (1) and whose bent ends (71) interconnect two aligned arms (3, 4) situated on either side of the central platform.

7. A floating structure according to any one of claims 1 to 6, characterized in that said central platform (1) is provided with floats (11).

8. A floating structure according to any one of claims 1 to 7, characterized by the fact that at least one of the radial arms (3) constitutes a gangway providing acccess to the central platform.

9. A floating structure according to any one of claims 1 to 8, characterized in that the central platform is equipped with an automatic feed dispenser device (10) for feeding the fishes contained in the net (5).

10. A floating structure according to any one of claims 1 to 9, characterized in that it includes four radial arms (2, 3) constituting half-diagonals of a square and supporting a net having a corresponding substantially square outline.

EP 0 299 900 B1

# FIG-1

# FIG-2

# FIG-3

7

FIG.4

FIG.5

FIG.6

8